# EUROPEAN PATENT APPLICATION

(11) **EP 4 116 889 A2**
(43) Date of publication of application: **11.01.2023**
(21) Application number: 22193197.5
(22) Date of filing: 31.08.2022
(51) Int. Cl.: G06N 5/04, G06F 16/9537, G06F 40/30

(54) **METHOD AND APPARATUS OF PROCESSING EVENT DATA, ELECTRONIC DEVICE, AND MEDIUM**

(30) Priority: 31.08.2021 CN 202111017722
(71) Applicant: Beijing Baidu Netcom Science Technology Co., Ltd., Beijing 100085 (CN)
(72) Inventor: YANG, Zhe, Beijing, 100085 (CN); ZHUO, Zecheng, Beijing, 100085 (CN); GONG, Jian, Beijing, 100085 (CN); HUANG, Qiang, Beijing, 100085 (CN); PAN, Xu, Beijing, 100085 (CN); HONG, Saiding, Beijing, 100085 (CN); ZHANG, Wenjun, Beijing, 100085 (CN); XU, Siqi, Beijing, 100085 (CN); LIN, Sicong, Beijing, 100085 (CN); LIU, Chenhui, Beijing, 100085 (CN)
(74) Representative: Zimmermann, Tankred Klaus

(57) **Abstract**

A method and an apparatus of processing event data, a device, a medium, and a product are provided, which relate to fields of deep learning, natural language processing, cloud services, etc. The method of processing event data includes: determining target feature data corresponding to target event data, in response to receiving a query request containing the target event data; selecting correlated feature data from candidate feature data based on the target feature data, wherein a similarity between the correlated feature data and the target feature data meets a preset similarity condition; determining operation data associated with the correlated feature data, wherein the operation data represents a level of attention to correlated event data corresponding to the correlated feature data; and determining a level of attention to the target event data based on the operation data.

## Description

### TECHNICAL FIELD

The present disclosure relates to a field of computer technology, in particular to fields of deep learning, natural language processing and cloud services, and more specifically to a method and an apparatus of processing event data, an electronic device, a medium, and a program product.

### BACKGROUND

With a rapid development of the Internet, various events in real life are usually published on the network. In some scenarios, it is needed to determine a heat level of an event in order to determine whether the public pays attention to the event. However, in a related art, when determining a heat level of an event, a determination result of the heat level is not accurate enough, which makes it difficult to accurately determine a public attention to the event.

### SUMMARY

The present disclosure provides a method and an apparatus of processing event data, an electronic device, a storage medium, and a program product.

According to an aspect of the present disclosure, a method of processing event data is provided, including: determining target feature data corresponding to target event data, in response to receiving a query request containing the target event data; selecting correlated feature data from candidate feature data based on the target feature data, wherein a similarity between the correlated feature data and the target feature data meets a preset similarity condition; determining operation data associated with the correlated feature data, wherein the operation data represents a level of attention to correlated event data corresponding to the correlated feature data; and determining a level of attention to the target event data based on the operation data.

According to another aspect of the present disclosure, an apparatus of processing event data is provided, including: a first determination module configured to determine target feature data corresponding to target event data, in response to receiving a query request containing the target event data; a selection module configured to select correlated feature data from candidate feature data based on the target feature data, wherein a similarity between the correlated feature data and the target feature data meets a preset similarity condition; a second determination module configured to determine operation data associated with the correlated feature data, wherein the operation data represents a level of attention to correlated event data corresponding to the correlated feature data; and a third determination module configured to determine a level of attention to the target event data based on the operation data.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of processing the event data described above.

According to another aspect of the present disclosure, a non-transitory computer-readable storage medium having computer instructions therein is provided, wherein the computer instructions are configured to cause a computer to implement the method of processing the event data described above.

According to another aspect of the present disclosure, a computer program product containing a computer program is provided, wherein the computer program, when executed by a processor, causes the processor to implement the method of processing the event data described above.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure.
FIG. 1 schematically shows a system architecture of a method and an apparatus of processing event data according to an embodiment of the present disclosure.
FIG. 2 schematically shows a flowchart of a method of processing event data according to an embodiment of the present disclosure.
FIG. 3 schematically shows a flowchart of a method of processing event data according to another embodiment of the present disclosure.
FIG. 4 schematically shows a schematic diagram of processing event data according to an embodiment of the present disclosure.
FIG. 5 schematically shows a block diagram of an apparatus of processing event data according to an embodiment of the present disclosure.
FIG. 6 shows a block diagram of an electronic device for implementing the method of processing the event data of embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The terms used herein are for the purpose of describing specific embodiments only and are not intended to limit the present disclosure. The terms "comprising", "including", "containing", etc. used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In a case of using the expression similar to "at least one of A, B and C", it should be explained according to the meaning of the expression generally understood by those skilled in the art (for example, "a system including at least one of A, B and C" should include but not be limited to a system including only A, a system including only B, a system including only C, a system including A and B, a system including A and C, a system including B and C, and/or a system including A, B and C).

Embodiments of the present disclosure provide a method of processing event data. The method of processing the event data includes: determining target feature data corresponding to target event data, in response to receiving a query request containing the target event data; selecting correlated feature data from candidate feature data based on the target feature data, wherein a similarity between the correlated feature data and the target feature data meets a preset similarity condition; determining operation data associated with the correlated feature data, wherein the operation data represents a level of attention to correlated event data corresponding to the correlated feature data; and determining a level of attention to the target event data based on the operation data.

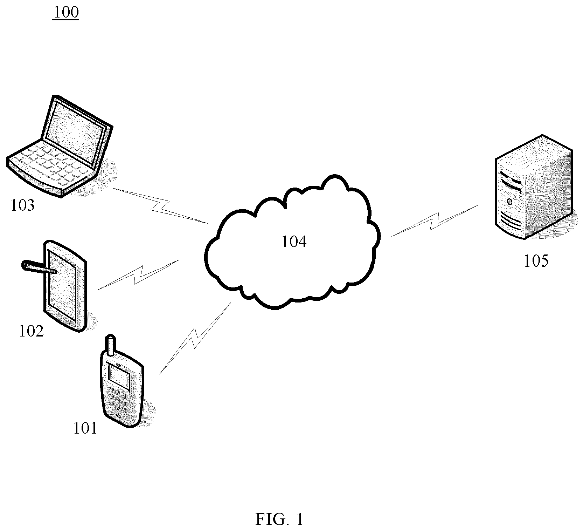

FIG. 1 schematically shows a system architecture of a method and an apparatus of processing event data according to an embodiment of the present disclosure. It should be noted that FIG. 1 is only an example of the system architecture in which embodiments of the present disclosure may be applied to help those skilled in the art understand the technical content of the present disclosure, but it does not mean that embodiments of the present disclosure may not be used for other devices, systems, environments or scenarios.

As shown in FIG. 1, a system architecture 100 according to this embodiment may include clients 101, 102, 103, a network 104, and a server 105. The network 104 is used to provide a medium for a communication link between the clients 101, 102, 103 and the server 105. The network 104 may include various connection types, such as wired or wireless communication links, or fiber optic cables, etc.

A user may use the clients 101, 102, 103 to interact with the server 105 through the network 104 to receive or send messages, etc. Various communication client applications may be installed on the clients 101, 102, 103, such as shopping applications, web browser applications, search applications, instant messaging tools, mailbox clients, social platform software, etc. (for example only).

The clients 101, 102, 103 may be various electronic devices having display screens and supporting web browsing, including but not limited to smartphones, tablet computers, laptop computers, desktop computers, etc. The clients 101, 102, 103 of embodiments of the present disclosure may run application programs, for example.

The server 105 may be a server that provides various services, such as a background management server that provides a support for a website browsed by the user using the clients 101, 102, 103 (for example only). The background management server may process, such as analyze a received user request and other data, and feed back a processing result (such as a web page, information, or data acquired or generated according to the user request) to the client. In addition, the server 105 may also be a cloud server, that is, the server 105 has a cloud computing function.

It should be noted that the method of processing the event data provided by embodiments of the present disclosure may be performed by the server 105. Accordingly, the apparatus of processing the event data provided by embodiments of the present disclosure may be provided in the server 105. The method of processing the event data provided by embodiments of the present disclosure may also be performed by a server or server cluster different from the server 105 and capable of communicating with the clients 101, 102, 103 and/or the server 105. Accordingly, the apparatus of processing the event data provided by embodiments of the present disclosure may also be provided in a server or server cluster different from the server 105 and capable of communicating with the clients 101, 102, 103 and/or the server 105.

For example, the query request containing the target event data may be transmitted through the clients 101, 102, 103. When receiving the query request from the clients 101, 102, 103 through the network 104, the server 105 may determine the level of attention to the target event data in response to the query request. Then, the server 105 may transmit the level of attention to the target event data to the clients 101, 102, 103 through the network 104, so that relevant personnel may view the level of attention to the target event data.

It should be understood that the number of clients, networks and servers in FIG. 1 is only schematic. According to implementation needs, there may be any number of clients, networks and servers.

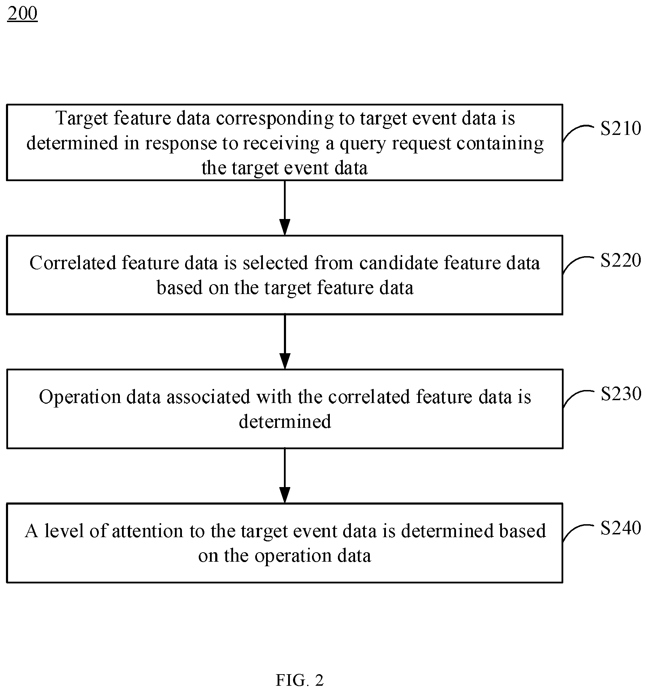

Embodiments of the present disclosure provide a method of processing event data. The method of processing the event data according to exemplary embodiments of the present disclosure will be described below with reference to FIG. 2 to FIG. 4 in combination with the system architecture in FIG. 1. The method of processing the event data of embodiments of the present disclosure may be performed, for example, by the server 105 shown in FIG. 1.

FIG. 2 schematically shows a flowchart of a method of processing event data according to an embodiment of the present disclosure.

As shown in FIG. 2, a method 200 of processing event data of the embodiment of the present disclosure may include, for example, operation S210 to operation S240.

In operation S210, target feature data corresponding to target event data is determined in response to receiving a query request containing the target event data.

In operation S220, correlated feature data is selected from candidate feature data based on the target feature data.

In operation S230, operation data associated with the correlated feature data is determined.

In operation S240, a level of attention to the target event data is determined based on the operation data.

Exemplarily, the target event data includes a relevant description information of an event of interest to the user, which includes but is not limited to an event time, a site of event, a human involved in event, and so on. In an example, the target event data may include an event title, and the event may include news. For example, when it is needed to determine a recent heat of a news event, the target event data may be input to a heat query platform, then the heat query platform may generate a query request based on the target event data and transmit the query request to the above-mentioned server or an electronic device mentioned below for performing event data processing.

Next, in response to receiving the query request, the server or the electronic device may acquire the target event data from the query request, and process the target event data to obtain the target feature data. The target feature data represents a semantic feature of the target event data.

Each candidate event data in a plurality of candidate event data may be processed based on a method same as or similar to the method of processing the target event data, so as to obtain the candidate feature data, and the candidate feature data may be pre-stored. The candidate event data may be, for example, news event data published on the network.

For a plurality of pre-stored candidate feature data, a similarity between the target feature data of the target event data and each candidate feature data is compared, so as to determine correlated feature data with a high similarity from the plurality of candidate feature data. The similarity between the correlated feature data and the target feature data meets a preset similarity condition.

Exemplarily, the correlated event data corresponding to the correlated feature data may indicate, for example, the same event as the target event data. That is, the news indicated by the correlated event data and the news indicated by the target event data are the same news, although they are different in expression.

After the correlated event data is selected, the operation data associated with the correlated feature data may be further determined. The operation data represents a level of attention to the correlated event data corresponding to the correlated feature data. After a plurality of correlated event data similar to the target event data is determined, the level of attention to the target event data may be determined based on the level of attention to the plurality of correlated event data. For example, the higher the level of attention to the correlated event data, the higher the level of attention to the target event data.

According to embodiments of the present disclosure, event data for the same event on the network may be diverse in expression, and it is difficult to manually determine the event data for the same event from massive event data. Based on embodiments of the present disclosure, by inputting the query request containing the target event data, a plurality of correlated event data indicating the same event as the target event data may be determined based on the feature data. The feature data may be, for example, a semantic feature, which may more accurately describe a feature of the event. After the plurality of correlated event data is determined, the level of attention to the target event data may be determined based on the level of attention to the plurality of correlated event data, which may improve an accuracy of a heat computation of the target event data and facilitate a determination of a public attention to the target event based on the heat of the target event data.

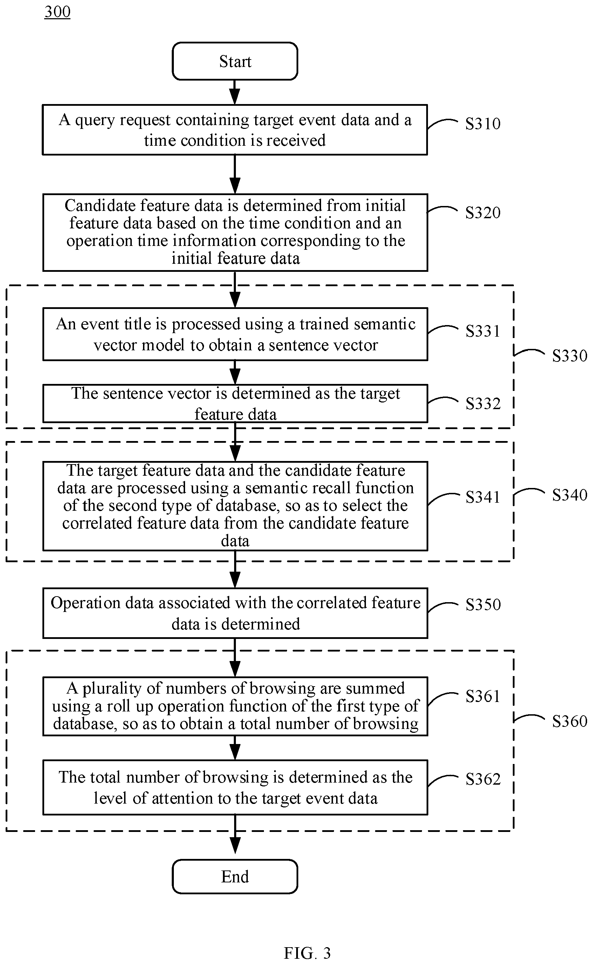

FIG. 3 schematically shows a flowchart of a method of processing event data according to another embodiment of the present disclosure.

As shown in FIG. 3, a method 300 of processing event data of embodiments of the present disclosure may include, for example, operation S310 to operation S360.

In operation S310, a query request containing target event data and a time condition is received.

In operation S320, candidate feature data is determined from initial feature data based on the time condition and an operation time information corresponding to the initial feature data.

For each initial event data in a plurality of initial event data, an event title of the initial event data may be processed using a semantic vector model, so as to obtain the initial feature data of each initial event data, and each initial feature data is pre-stored. Each initial feature data corresponds to the operation time information that represents a browsing time of browsing the initial event data, and the browsing time may include a click time of clicking on the event title.

Exemplarily, the query request contains a time condition, which may include, for example, a specific time range. After the query request is received, the candidate feature data is determined based on the operation time information corresponding to each initial feature data, and the operation time information corresponding to the candidate feature data meets the time condition. For example, when the operation time information corresponding to the candidate feature data is a time moment, the time moment falls within the above-mentioned time range.

In operation S330, the target feature data corresponding to the target event data is determined. For example, the target event data may include an event title. Operation S330 includes, for example, operation S331 to operation S332 described below.

In operation S331, the event title is processed using a trained semantic vector model to obtain a sentence vector.

In operation S332, the sentence vector is determined as the target feature data.

Exemplarily, after the query request is received, the event title is processed using the trained semantic vector model to obtain a sentence vector such as a multidimensional vector, which represents a semantic feature of the event title.

In operation S340, the correlated feature data is selected from the candidate feature data based on the target feature data.

Exemplarily, a similarity between the correlated feature data and the target feature data meets a preset similarity condition, which includes that a vector distance between a sentence vector corresponding to the correlated feature data and the sentence vector corresponding to the target feature data is less than a preset sentence vector distance. For example, the sentence vector distance may be, for example, a cosine distance between two sentence vectors, or may be other types of distances.

Exemplarily, the sentence vector may accurately describe the semantic feature of the event. Therefore, selecting the correlated feature data based on a similarity comparison of sentence vectors may improve an accuracy of the selection of the correlated feature data to a certain extent.

Exemplarily, the candidate feature data may be stored, for example, in a second type of database. A specific implementation of operation S340 may include operation S341.

In operation S341, the target feature data and the candidate feature data are processed using a semantic recall function of the second type of database, so as to select the correlated feature data from the candidate feature data.

Exemplarily, the second type of database may include, for example, a non-relational database. For example, the second type of database may be an ES (Elastic Search) database. The semantic recall function of the ES database has advantages of high efficiency and high accuracy. After the target feature data is determined, the semantic recall function is used to compare the similarity between the target feature data and each candidate feature data stored in the ES database, which may improve a recall efficiency and a recall accuracy of the correlated feature data.

In operation S350, operation data associated with the correlated feature data is determined.

In operation S360, a level of attention to the target event data is determined based on the operation data.

Exemplarily, in a case that the correlated event data includes a plurality of correlated event data, the operation data includes a plurality of numbers of browsing corresponding to the plurality of correlated event data respectively. A total number of browsing may be obtained by summing the plurality of numbers of browsing. The operation data associated with the candidate feature data may be stored, for example, in a first type of database. For example, a specific implementation of operation S360 may include operation S361 to operation S362.

In operation S361, the plurality of numbers of browsing are summed using a roll up operation function of the first type of database, so as to obtain the total number of browsing.

In operation S362, the total number of browsing is determined as the level of attention to the target event data.

Exemplarily, the first type of database may include an analytical database, and the first type of database may include, for example, a Doris database. The Doris database has a roll up operation function. For the plurality of numbers of browsing stored in a table of the database, the roll up operation function means summing the numbers of browsing from a bottom to a top of the table. The roll up operation function of the Doris database has an advantage of a fast computing speed.

In embodiments of the present disclosure, the efficiency and accuracy of the heat computation for the target event data may be improved by a combined use of the first type of database and the second type of database. The first type of database has advantages in the summation of the numbers of browsing, and the second type of database has advantages in the comparison of feature data. The combination of the two types of databases greatly improves the efficiency and accuracy of the heat computation.

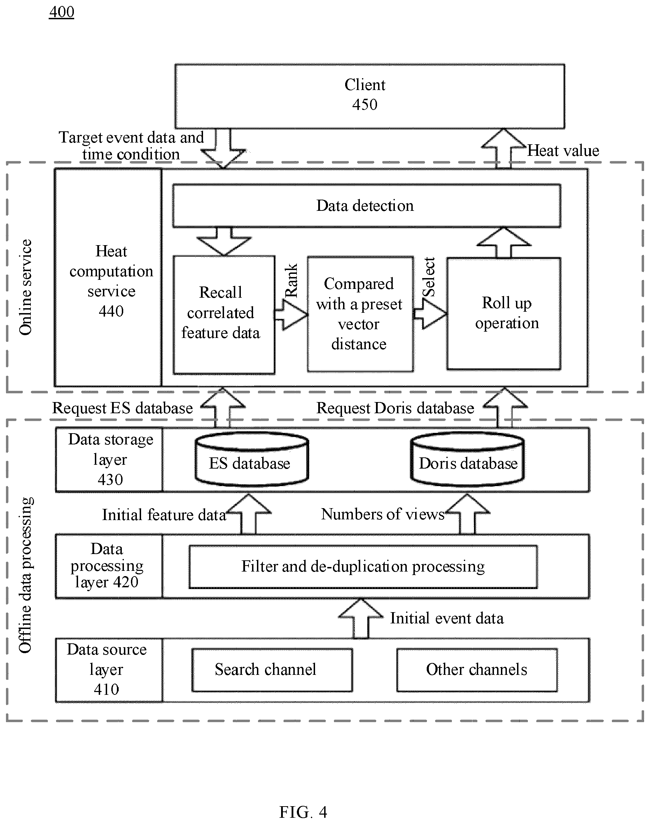

FIG. 4 schematically shows a schematic diagram of processing event data according to an embodiment of the present disclosure.

As shown in FIG. 4, an embodiment 400 of the present disclosure includes, for example, a data source layer 410, a data processing layer 420, a data storage layer 430, a heat computation service 440, and a client 450. The data source layer 410, the data processing layer 420 and the data storage layer 430 may perform offline data processing, for example. The heat computation service 440 and the client 450 may be used to perform online service computation, for example.

With regard to a function of the data source layer 410, the data source layer 410 may store, for example, the initial event data. The initial event data may be, for example, from a search channel such as browsers and other channels such as social platforms. The initial event data may be pulled from the search channel and other channels every hour. Each initial event data may include an event title and a description information, and the description information may include, for example, the browsing time (click time), the number of browsing, etc.

The data processing layer 420 is used to, for example, perform filter processing and de-duplication processing on the plurality of initial event data. The filter processing may include, for example, extracting event data belonging to a news type from the plurality of initial event data. For the initial event data obtained after the filter processing, the de-duplication processing is performed to, for example, merge repeated initial event data, such as retaining one of repeated event titles, summing the numbers of browsing corresponding to the repeated event titles, and summarizing other description information corresponding to the repeated event titles.

The data storage layer 430 includes an ES database and a Doris database. After performing the filter processing and the de-duplication processing, the data processing layer 420 may process each initial event data using the trained semantic vector model, and write the obtained initial feature data (sentence vector) into the ES database. The browsing time corresponding to the initial event data may also be stored in the ES database to facilitate a subsequent event recall based on the time condition. In addition, the numbers of browsing of the initial event data may be stored in the Doris database, and a title number and a relevant description information corresponding to the initial event data may also be stored in the Doris database. The title number stored in the Doris database may be associated with the corresponding initial feature data (sentence vector) in the ES database, so that the corresponding numbers of browsing may be found through the Doris database for summation after the event recall is performed based on the ES database,.

After receiving the target event data and the time condition from the client 450, a heat value (the level of attention) for the target event data may be calculated by the heat computation service 440. For example, a data detection may be performed on the received target event data and time condition in order to detect whether the data is legal. Then, the ES database is requested to recall the correlated feature data. For example, the candidate feature data may be determined from the ES database based on the time condition, then the target event data may be processed using the trained semantic vector model to obtain the target feature data (sentence vector), and a plurality of correlated feature data similar to the target feature data may be recalled from the candidate feature data stored in the ES database based on the target feature data. The recalled plurality of correlated feature data may be ranked based on the similarity (vector distance), then the similarity (vector distance) corresponding to each ranked correlated feature data is compared with a preset vector distance, and several top correlated feature data corresponding to a vector distance less than the preset vector distance may be selected.

Next, the numbers of browsing corresponding to the correlated feature data may be summed using the roll up operation function of the Doris database, so as to obtain a total number of browsing (heat value) for the target event data. The total number of browsing (heat value) may be fed back to the client 450.

Through the method of processing the event data of embodiments of the present disclosure, the heat of the event may be calculated, and hot events may be well provided to the user, so that the user may better pay attention to the event of interest.

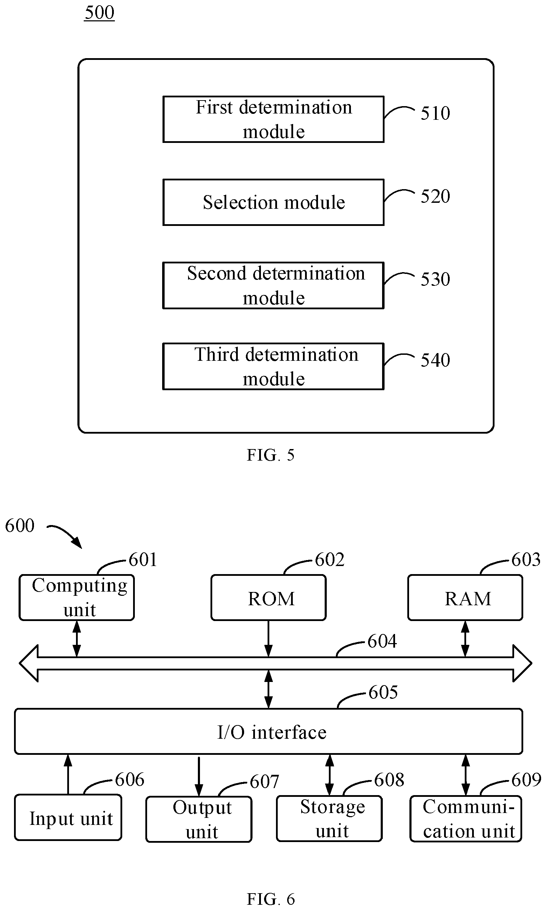

FIG. 5 schematically shows a block diagram of an apparatus of processing event data according to an embodiment of the present disclosure.

As shown in FIG. 5, an apparatus 500 of processing event data of embodiments of the present disclosure includes, for example, a first determination module 510, a selection module 520, a second determination module 530, and a third determination module 540.

The first determination module 510 may be used to determine target feature data corresponding to target event data in response to receiving a query request containing the target event data. According to embodiments of the present disclosure, the first determination module 510 may perform, for example, the operation S210 described above with reference to FIG. 2, which will not be described in detail here.

The selection module 520 may be used to select correlated feature data from candidate feature data based on the target feature data, and a similarity between the correlated feature data and the target feature data meets a preset similarity condition. According to embodiments of the present disclosure, the selection module 520 may perform, for example, the operation S220 described above with reference to FIG. 2, which will not be described in detail here.

The second determination module 530 may be used to determine operation data associated with the correlated feature data, and the operation data represents a level of attention to correlated event data corresponding to the correlated feature data. According to embodiments of the present disclosure, the second determination module 530 may perform, for example, the operation S230 described above with reference to FIG. 2, which will not be described in detail here.

The third determination module 540 may be used to determine a level of attention to the target event data based on the operation data. According to embodiments of the present disclosure, the third determination module 540 may perform, for example, the operation S240 described above with reference to FIG. 2, which will not be described in detail here.

According to embodiments of the present disclosure, the correlated event data may include a plurality of correlated event data, and the operation data may include a plurality of numbers of browsing corresponding to the plurality of correlated event data respectively. The third determination module 540 includes a summation sub-module and a first determination sub-module. The summation sub-module is used to sum the plurality of numbers of browsing to obtain a total number of browsing. The first determination sub-module is used to determine the total number of browsing as the level of attention to the target event data.

According to embodiments of the present disclosure, operation data associated with the candidate feature data is stored in a first type of database. The summation sub-module is further used to sum the plurality of numbers of browsing to obtain the total number of browsing by using a roll up operation function of the first type of database.

According to embodiments of the present disclosure, the candidate feature data is stored in a second type of database. The selection module 520 is further used to process the target feature data and the candidate feature data by using a semantic recall function of the second type of database, so as to select the correlated feature data from the candidate feature data.

According to embodiments of the present disclosure, the first type of database includes an analytical database, and the second type of database includes a non-relational database.

According to embodiments of the present disclosure, the query request may further contain a time condition. The apparatus 500 may further include a fourth determination module used to determine the candidate feature data from initial feature data based on the time condition and an operation time information corresponding to the initial feature data. The operation time information corresponding to the candidate feature data meets the time condition.

According to embodiments of the present disclosure, the target event data may include an event title. The first determination module 510 includes a processing sub-module and a second determination sub-module. The processing sub-module is used to process the event title by using a trained semantic vector model, so as to obtain a sentence vector. The second determination sub-module is used to determine the sentence vector as the target feature data. The preset similarity condition includes that a vector distance between the sentence vector corresponding to the correlated feature data and the sentence vector corresponding to the target feature data is less than a preset sentence vector distance.

In the technical solution of the present disclosure, an acquisition, a storage, an application, a processing, a transmission, a provision, a disclosure, and an application of user personal information involved comply with provisions of relevant laws and regulations, take essential confidentiality measures, and do not violate public order and good custom.

In the technical solution of the present disclosure, authorization or consent is obtained from the user before the user's personal information is obtained or collected.

According to embodiments of the present disclosure, the present disclosure further provides an electronic device, a readable storage medium, and a computer program product.

FIG. 6 shows a block diagram of an electronic device for implementing the method of processing the event data of embodiments of the present disclosure.

FIG. 6 shows a schematic block diagram of an exemplary electronic device 600 for implementing embodiments of the present disclosure. The electronic device 600 is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and processes described above, such as the method of processing the event data. For example, in some embodiments, the method of processing the event data may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the method of processing the event data described above. Alternatively, in other embodiments, the computing unit 601 may be configured to perform the method of processing the event data by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, or a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of processing event data, comprising:
determining (S210, S330) target feature data corresponding to target event data, in response to receiving a query request containing the target event data;
selecting (S220, S340) correlated feature data from candidate feature data based on the target feature data, wherein a similarity between the correlated feature data and the target feature data meets a preset similarity condition;
determining (S230, S350) operation data associated with the correlated feature data, wherein the operation data represents a level of attention to correlated event data corresponding to the correlated feature data; and
determining (S240, S360) a level of attention to the target event data based on the operation data.

2. The method of claim 1, wherein the correlated event data comprises a plurality of correlated event data, and the operation data comprises a plurality of numbers of browsing corresponding to the plurality of correlated event data respectively; and
wherein the determining (S240, S360) a level of attention to the target event data based on the operation data comprises:
summing the plurality of numbers of browsing to obtain a total number of browsing; and
determining (S362) the total number of browsing as the level of attention to the target event data.

3. The method of claim 2, wherein operation data associated with the candidate feature data is stored in a first type of database; and the summing the plurality of numbers of browsing to obtain a total number of browsing comprises:
summing (S361) the plurality of numbers of browsing by using a roll up operation function of the first type of database to obtain the total number of browsing.

4. The method of any one of claims 1 to 3, wherein the candidate feature data is stored in a second type of database; and the selecting (S220, S340) correlated feature data from candidate feature data based on the target feature data comprises:
processing (S341) the target feature data and the candidate feature data by using a semantic recall function of the second type of database, so as to select the correlated feature data from the candidate feature data.

5. The method of claim 3 or 4, wherein the first type of database comprises an analytical database, and the second type of database comprises a non-relational database.

6. The method of any one of claims 1 to 5, wherein the query request further contains a time condition; and the method further comprises:
determining (S320) the candidate feature data from initial feature data based on the time condition and an operation time information corresponding to the initial feature data, wherein an operation time information corresponding to the candidate feature data meets the time condition.

7. The method of any one of claims 1 to 6, wherein the target event data comprises an event title; and the determining (S210, S330) target feature data corresponding to target event data comprises:
processing (S331) the event title using a trained semantic vector model, so as to obtain a sentence vector; and
determining (S332) the sentence vector as the target feature data, wherein the preset similarity condition comprises that a vector distance between a sentence vector corresponding to the correlated feature data and the sentence vector corresponding to the target feature data is less than a preset sentence vector distance.

8. An apparatus of processing event data (500), comprising:
a first determination module (510) configured to determine target feature data corresponding to target event data, in response to receiving a query request containing the target event data;
a selection module (520) configured to select correlated feature data from candidate feature data based on the target feature data, wherein a similarity between the correlated feature data and the target feature data meets a preset similarity condition;
a second determination module (530) configured to determine operation data associated with the correlated feature data, wherein the operation data represents a level of attention to correlated event data corresponding to the correlated feature data; and
a third determination module (540) configured to determine a level of attention to the target event data based on the operation data.

9. The apparatus (500) of claim 8, wherein the correlated event data comprises a plurality of correlated event data, and the operation data comprises a plurality of numbers of browsing corresponding to the plurality of correlated event data respectively; and
wherein the third determination module (540) comprises:
a summation sub-module configured to sum the plurality of numbers of browsing to obtain a total number of browsing; and
a first determination sub-module configured to determine the total number of browsing as the level of attention to the target event data,
wherein operation data associated with the candidate feature data is stored in a first type of database; and the summation sub-module is further configured to:
sum the plurality of numbers of browsing by using a roll up operation function of the first type of database to obtain the total number of browsing.

10. The apparatus (500) of claim 8 or 9, wherein the candidate feature data is stored in a second type of database; and the selection module (520) is further configured to:
process the target feature data and the candidate feature data by using a semantic recall function of the second type of database, so as to select the correlated feature data from the candidate feature data.

11. The apparatus (500) of claim 9 or 10, wherein the first type of database comprises an analytical database, and the second type of database comprises a non-relational database.

12. The apparatus (500) of any one of claims 8 to 11, wherein the query request further contains a time condition; and the apparatus further comprises:
a fourth determination module configured to determine the candidate feature data from initial feature data based on the time condition and an operation time information corresponding to the initial feature data, wherein an operation time information corresponding to the candidate feature data meets the time condition,
wherein the target event data comprises an event title; and the first determination module (510) comprises:
a processing sub-module configured to process the event title using a trained semantic vector model, so as to obtain a sentence vector; and
a second determination sub-module configured to determine the sentence vector as the target feature data, wherein the preset similarity condition comprises that a vector distance between a sentence vector corresponding to the correlated feature data and the sentence vector corresponding to the target feature data is less than a preset sentence vector distance.

13. An electronic device (600), comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 7.

14. A non-transitory computer-readable storage medium having computer instructions therein, wherein the computer instructions are configured to cause a computer to implement the method of any one of claims 1 to 7.

15. A computer program product containing a computer program, wherein the computer program, when executed by a processor, causes the processor to implement the method of any one of claims 1 to 7.
